(19) **Europäisches Patentamt**
**European Patent Office**
**Office européen des brevets**

(11) **EP 4 640 927 A1**

(12) **EUROPEAN PATENT APPLICATION**
published in accordance with Art. 153(4) EPC

(43) Date of publication:
**29.10.2025 Bulletin 2025/44**

(21) Application number: **23907372.9**

(22) Date of filing: **26.10.2023**

(51) International Patent Classification (IPC):
$C25D\ 7/06^{(2006.01)}$     $C25D\ 5/50^{(2006.01)}$
$C25D\ 5/36^{(2006.01)}$     $C22C\ 38/12^{(2006.01)}$
$C22C\ 38/04^{(2006.01)}$     $C22C\ 38/02^{(2006.01)}$
$C22C\ 38/00^{(2006.01)}$

(52) Cooperative Patent Classification (CPC):
**C22C 38/00; C22C 38/02; C22C 38/04;**
**C22C 38/12; C25D 5/36; C25D 5/50; C25D 7/06**

(86) International application number:
**PCT/KR2023/016714**

(87) International publication number:
**WO 2024/136086 (27.06.2024 Gazette 2024/26)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **20.12.2022 KR 20220179027**

(71) Applicant: **POSCO Co., Ltd**
**Pohang-si, Gyeongsangbuk-do 37859 (KR)**

(72) Inventors:
• **JO, Min-Ho**
  **Pohang-si, Gyeongsangbuk-do 37877 (KR)**
• **JEON, Jea-Chun**
  **Pohang-si, Gyeongsangbuk-do 37877 (KR)**
• **HONG, Young-Kwang**
  **Pohang-si, Gyeongsangbuk-do 37877 (KR)**

(74) Representative: **Meissner Bolte Partnerschaft**
**mbB**
**Patentanwälte Rechtsanwälte**
**Postfach 86 06 24**
**81633 München (DE)**

(54) **PLATED STEEL SHEET AND METHOD FOR MANUFACTURING SAME**

(57)     The present invention relates to a plated steel sheet and a method for manufacturing same and, more specifically, to a nickel-plated steel sheet having superior strength and processability and a method for manufacturing same.

## Description

Technical Field

The present disclosure relates to a plated steel sheet and a method for manufacturing the same, and more particularly, a Ni plated steel sheet having excellent strength and processability, and a method for manufacturing the same.

Background Art

In the case of a cylindrical can used in a cylindrical battery case, it may be common to use nickel (Ni) plating on a steel plate to withstand corrosion caused by electrolyte entering a battery. Recently, as demand for electric vehicles has increased, demand for a cylindrical battery case material for an electric vehicle has increased significantly.

To ensure battery safety at high temperatures, demand for high-temperature strength in a battery case material may increase. When a battery is heated by factors such as overcurrent, an abnormal chemical reaction may occur, such that the temperature may rise to approximately 600°C. Accordingly, since the battery case material may be exposed to a high temperature of several hundred degrees instantaneously, heat resistance properties may need to be ensured to maintain the shape at a high temperature. When a car is driven, a battery case may be deformed due to a temperature increase, which may affect driving of the car, and thus, deformation at a high temperature may need to be strictly suppressed to prevent the occurrence thereof.

The heat resistance properties of an electric vehicle battery may be evaluated in various manners. For example , an electric vehicle battery may be heated to a temperature of about 600°C to evaluate stability of a cell. In order to prevent deformation of a battery, it may be preferable to ensure a specific level of yield strength at 600°C or higher for the battery case material. In this case, when forming a battery case, it may also be necessary to consider a decrease in the material thickness by about 30-50%.

In addition to physical properties at a high temperature, physical properties at room temperature may also be important for the battery case material. When strength at room temperature is low, deformation may occur after filling the battery, and to prevent this, a specific level of yield strength or higher may be required.

Also, room temperature properties may also be required in terms of processability of the material. Since a cylindrical battery case may need a multi-stage processing process such as drawing and ironing during molding, processing properties at room temperature may also be necessary in addition to the high temperature properties. When yield strength is a specific level or more, mold wear may become severe during processing, such that it may be necessary to replace the mold frequently, which may be problematic and may need to be avoided.

Cited document 1 discloses a method of using fine precipitates by adding Nb, Cr, W, or the like, to ultra-low carbon steel with C: 0.003% or less to ensure room temperature and high temperature characteristics. The characteristics may be improved by fine precipitates, but a large amount of expensive precipitate-forming elements may need to be added, which may be advantageous.

Cited document 2 discloses a method of performing secondary rolling on general low carbon steel with C: 0.04-0.06% to manufacture a high-strength steel sheet for can. As the most common method for increasing strength of can materials, secondary rolling may be performed at a reduction ratio of 20-30% after recrystallization-annealing, such that strength may be greatly improved through work hardening, which may be advantageous. However, at such a high level of compression, it may be difficult to ensure can processability because elongation decreases significantly.

Cited document 3 discloses a method for improving strength through solid solution strengthening by adding a large amount of N of 130 ppm or more and increasing elongation by applying a low secondary compression reduction rate of 20% or less. However, when adding a large amount of N, which is an interstitial element, composition deviation may easily occur, and when composition deviation occurs, material deviation may also occur. Accordingly, additional efforts may be necessary during a steelmaking process in order to control the composition deviation to be low.

Cited document 4 discloses a method for ensuring strength using precipitation strengthening through addition of Ti, and by applying a relatively lower secondary compression reduction rate of 15% or less, additionally reducing a decrease in elongation due to work hardening and ensuring a balance between strength and ductility. However, the addition of Ti may form a great deal of inclusions in the steelmaking process due to high oxygen affinity, which may reduce cleanliness. The increase in inclusions in the steel may become a starting point of cracks during a forming process, such that additional efforts may be necessary to remove the inclusions.

[Prior art]

[Patent Reference]

(Cited document 1) Korean Laid-Open Patent Publication No. 2019-0078406
(Cited document 2) Korean Laid-Open Patent Publication No. 1999-0053991
(Cited document 3) Korean Laid-Open Patent Publication No. 2003-147499
(Cited document 4) Korean Laid-Open Patent Publication No. 2018-0109964

Detailed description of the present disclosure

Technical problems to solve

An aspect of the present disclosure is to provide a plated steel sheet and a method for manufacturing the same.
An aspect of the present disclosure is to provide a Ni plated steel sheet having excellent strength and processability and a method for manufacturing the same.
The purpose of the present invention is not limited to the above-described features. A person having ordinary knowledge in the technical field to which the present disclosure belongs may have no difficulty in understanding the additional subject matter of the present disclosure.

Solution to Problem

An aspect of the present disclosure provides a plated steel sheet including a base steel sheet including, by weight%, C: 0.0010-0.0050%, Si: 0.050% or less, Mn: 0.10-0.60%, Al: 0.010-0.060%, P: 0.015% or less, S: 0.015% or less, N: 0.0060% or less, Nb: 0.0100-0.0400%, and a balance of Fe and inevitable impurities;

a Fe-Ni alloy layer having a thickness of 0.6-1.8 $\mu$m, and formed on a base steel sheet; and
a Ni plating layer formed on the Fe-Ni alloy layer,
wherein an R value defined in relational expression 1 is 0 or less, and
wherein a room-temperature yield strength is 220-280 MPa:

$$[\text{Relational expression 1}]$$

$$R = ([C]/12.011 - [Nb]/92.906) \times 10^6$$

where [C] and [Nb] are weight% of each element.

An R value defined in relational expression 1 may be -120.0 or more.
In the base steel sheet, a sum of contents of solid-solution C and solid-solution N may be 4.0 ppm or lower.
A grain size of the base steel sheet may be 11.0 or more in terms of ASTM standard.
The plated steel sheet may have a yield strength of 100 MPa or more at 600°C after rolling at a reduction ratio of 30%.
An aspect of the present disclosure provides a method for manufacturing the plated steel sheet including reheating a steel slab including, by weight%, C: 0.0010-0.0050%, Si: 0.050% or less, Mn: 0.10-0.60%, Al: 0.010-0.060%, P: 0.015% or less, S: 0.015% or less, N: 0.0060% or less, Nb: 0.0100-0.0400%, and a balance of Fe and inevitable impurities, and having an R value of 0 or less, the R value defined in relational expression 1;

finishing-rolling the reheated steel slab;
cooling and coiling the finishing-rolled steel sheet;
cold-rolling the coiled steel sheet at a reduction ratio of 78.0-90.0%;
recrystallization-annealing the cold-rolled steel sheet in a temperature range of 730-800°C;
Ni-electroplating the cold-rolled steel sheet; and
alloying-annealing the Ni-electroplated steel sheet in a temperature range of 650-750°C:

$$[\text{Relational expression 1}]$$

$$R = ([C]/12.011 - [Nb]/92.906) \times 10^6$$

where [C] and [Nb] are weight% of each element.

The reheating may be performed in a temperature range of 1180°C or higher,

The finishing-rolling may be performed in a temperature range of Ar3 or higher, and
The cooling and coiling may be performed in a temperature range of 580-720°C.

The method may further include pickling the coiled steel sheet before the cold-rolling.
In the Ni-electroplating, a plating thickness may be 0.6 $\mu$m or more.
The method may further include rolling at a pressure reduction of 3.0% or less after the recrystallization-annealing.
The method may further include rolling at a pressure reduction of 2.0% or less after the alloying-annealing.

Advantageous Effects of Invention

According to an aspect of the present disclosure, a plated steel sheet and a method for manufacturing the same may be provided.
According to an aspect of the present disclosure, a Ni plated steel sheet having excellent strength and processability and a method for manufacturing the same may be provided.
According to an aspect of the present disclosure, an Ni-plated steel sheet having excellent strength and processability which may be used for an electric vehicle battery case, and a method for manufacturing the same may be provided.

Best Mode for Invention

Hereinafter, preferable embodiments of the present disclosure will be described. The embodiments of the present disclosure may be modified in various forms, and the scope of the present disclosure should not be construed as being limited to the embodiments described below. The embodiments are provided to describe the present disclosure in greater detail to those skilled in the art to which the present invention belongs.
The present disclosure may be described in detail.
A plated steel sheet according to the embodiment of the present disclosure may include a base steel sheet, an Fe-Al alloy layer, and a Ni plating layer.

Base steel sheet

The base steel sheet according to an embodiment of the present disclosure may include, in weight %, C: 0.0010-0.0050%, Si: 0.050% or less, Mn: 0.10-0.60%, Al: 0.010-0.060%, P: 0.015% or less, S: 0.015% or less, N: 0.0060% or less, Nb: 0.0100-0.0400%, and a balance of Fe and inevitable impurities.
Hereinafter, the composition of the base steel sheet of the present disclosure may be described in detail.
Unless otherwise indicated in the present disclosure, % indicating the content of each element may be based on weight.

Carbon (C): 0.0010-0.0050%

Carbon (C) may be added to improve strength of steel sheets. When the content is low, strength may be low and it may be difficult to use as a structural material, such that carbon (C) may be included in 0.0010% or more. Also, in order to lower the carbon (C) content to less than 0.0010%, the load of the steelmaking process may increase significantly, such that productivity may be reduced. According to the embodiment of the present disclosure, carbon (C) may be included in 0.0015% or more. On the other hand, when the carbon (C) content is excessively high, strength may be excessively high, such that a mold wear rate may increase during forming and elongation may decrease, which may reduce formability, and thus, an upper limit thereof may be limited to 0.0050%. In the present disclosure, carbon (C) may be combined with added Nb and may be present mostly in the form of fine NbC precipitates. The fine NbC may be stable even at high temperature, and may contribute to improvement of strength at high temperature by preventing excessive growth of grain. According to the embodiment of the present disclosure, carbon (C) may be included in 0.0040% or less.

Silicon (Si): 0.050% or less

Silicon (Si) may be used as a decarburizing agent and may contribute to improvement of strength by solid-solution strengthening, such that silicon (Si) may be included in steel. However, when a content thereof is excessive, Si-based oxides may be formed on the surface during annealing, which may cause defects during plating and may reduce plating properties. Accordingly, in consideration of this, in the present disclosure, an upper limit thereof may be limited to 0.050%. According to the embodiment of the present disclosure, silicon (Si) may be included in an amount of 0.03% or less. Considering the content inevitably included during the manufacturing process, 0% may be excluded.

Manganese (Mn): 0.10-0.60%

Manganese (Mn) may combine with solid-solution S in steel and may be precipitated as MnS such that manganese (Mn) may prevent hot shortness caused by solid-solution S. To obtain this effect, manganese (Mn) may be included by 0.1% or more. Also, manganese (Mn) may be solid-solute in steel and may increase strength of steel together with C. According to the embodiment of the present disclosure, 0.15% or more of manganese (Mn) may be included. When a content thereof is excessive, the formality of steel may be reduced, such that an upper limit thereof may be limited to 0.60%. According to the embodiment of the present disclosure, an upper limit thereof may be limited to 0.35%.

Aluminum (Al): 0.010-0.060%

Aluminum (Al) may have a strong deoxidizing effect and may react with N in steel and may precipitate AlN, thereby preventing the deterioration of formability caused by solid-solution N. To obtain the effect, aluminum (Al) may be added by 0.010% or more. In an embodiment of the present disclosure, aluminum (Al) may be added by 0.015% or more. When a large amount thereof is added, the effect of additional addition may be minimal, and thus, a content thereof may be limited to 0.060% or less. In an embodiment of the present disclosure, an upper limit of the aluminum (Al) content may be limited to 0.045%.

Phosphorus (P): 0.015% or less

The addition of a certain amount of phosphorus (P) may increase strength without significantly reducing ductility of steel. However, when a content thereof exceeds 0.015%, phosphorus (P) may segregate at a grain boundary, may excessively harden the steel, and may reducing an elongation. Considering the content inevitably included during the manufacturing process, 0% may be excluded.

Sulfur (S): 0.015% or less

Sulfur (S) may cause hot shortness in solid-solution, such that precipitation of MnS may need to be induced through addition of Mn. As the sulfur (S) content increases, the corresponding level of Mn may need to be additionally added, and thus, a large amount of sulfur (S) in steel may not be preferable. Accordingly, in the present disclosure, an upper limit of sulfur (S) content may be limited to 0.015%. Considering the content inevitably included during the manufacturing process, 0% may be excluded.

Nitrogen (N): 0.0060% or less

Nitrogen (N) may be present in a solid-solution state and may cause aging, which may significantly reduce processability. In order to minimize the decrease in ductility due to unnecessary aging, an upper limit thereof may be limited to 0.0060%. Meanwhile, nitrogen (N) may be inevitably contained in steel, and thus, 0% may be excluded.

Niobium (Nb): 0.0100-0.0400%

Niobium (Nb) may combine with C and may be precipitated in the form of fine NbC while being stable at high temperature. Fine NbC precipitates may contribute to improvement of high-temperature strength by suppressing grain growth. When the niobium (Nb) content is less than 0.0100%, it may be difficult to expect sufficient high-temperature strength increase effect by NbC. In an embodiment of the present disclosure, niobium (Nb) may be included in 0.0150% or more. When the niobium (Nb) content exceeds 0.0400%, niobium (Nb) may significantly increase deformation resistance during hot-rolling, thereby hindering hot-rolling properties. An upper limit thereof may be limited to 0.0350% in an embodiment of the present disclosure.

The steel of the present disclosure may include, in addition to the above-described components, the remainder as iron (Fe) and inevitable impurities. In a general manufacturing process, inevitable impurities may be inevitably added from raw materials or an ambient environment, and thus, impurities may not be excluded. A person skilled in the art of a general manufacturing process may be aware of the impurities, and thus, the descriptions of the impurities may not be provided in the present disclosure.

The base steel sheet may have an R value of 0 or less, the R value defined in relational expression 1 below.

$$[\text{Relational expression 1}]$$

$$R = ([C]/12.011-[Nb]/92.906) \times 10^{6}$$

(in the expression, [C] and [Nb] may be weight% of each element)

In the present disclosure, relational expression 1 may be used as an indicator of the tendency of C to combine with Nb and precipitate as NbC. When the Nb content is sufficient, C may be sufficiently precipitated as NbC and solid-solution C may be reduced, thereby improving room temperature processability. When the amount of Nb added is insufficient, C may not be present in the form of NbC, and may remain in a solid-solution state in the steel. The solid-solution C may cause accelerated aging at high temperature during alloying-annealing at high temperature, which may significantly increase strength of the steel. The increase in strength due to aging may increase friction with the mold during processing, and may hinder processability, and thus, it may be necessary to control the content relationship between C and Nb such that solid-solution C may be reduced as much as possible. Accordingly, in the present disclosure, when the content relationship therebetween is to be controlled through relational expression 1, the value may be limited to 0 or less.

When the R value defined in relational expression 1 exceeds 0, Nb may be insufficient and C may be present in a solid-solution state. When solid-solution C is present, strength may increase significantly during alloying-annealing, which may hinder formability at room temperature. Also, when NbC is insufficient, the grain may increase significantly and strength at high temperature may decrease, which may deteriorate stability during product manufacturing. in the embodiment of the present disclosure, the R value may be -10.0 or less. In order to prevent economic deterioration due to excessive Nb addition, a lower limit thereof may be limited to -120.0. According to the embodiment of the present disclosure, a lower limit of the R value may be -100.0.

A sum of contents of solid-solution C and solid-solution N in the base steel sheet according to the embodiment of the present disclosure may be 4.0 ppm or lower.

When the sum of contents of solid-solution C and solid-solution N exceeds 4.0 ppm, strength may increase and formability may be defective due to aging at high temperature during alloying. In the present disclosure, the contents of solid-solution C and solid-solution N may be measured through an internal friction test. According to the embodiment of the present disclosure, the sum of contents of solid-solution C and solid-solution N may be 3.8 ppm or lower.

In the description below, the steel microstructure of the present disclosure may be described in detail.

Unless otherwise indicated in the present disclosure, % indicating the fraction of the microstructure may be based on area.

The base steel sheet according to the embodiment of the present disclosure may have an ASTM standard grain size of 11.0 or more.

In the present disclosure, a grain at 1/2 point in the thickness direction of the steel sheet may be measured, and the size may be limited in order to obtain the effect of strength enhancement as a grain boundary impedes the dislocation movement at high temperature.

The ASTM grain size (ASTM grain size number) may be an index correlated with the grain size and may be calculated and measured by ASTM E112 (standard test methods for determining an average grain size) from an image obtained through optical microstructure observation. It may be indicated that, as the ASTM grain size increases, the average grain size may be reduced.

When the grain size is less than 11.0, the grain boundary may be small and may not effectively impede the dislocation movement at high temperature, such that high-temperature strength may be reduced. When the high-temperature strength decreases, a battery may explode at high temperature, which may reduce safety.

Fe-Ni alloy layer

An Fe-Ni alloy layer having a thickness of 0.6-1.8 $\mu$m, formed on the base steel sheet, may be included.

The thickness of the Fe-Ni alloy layer may indicate the thickness of the composition change layer in which Fe and Ni components are present by diffusion between the base steel sheet and the Ni plating layer, and may be measured using a glow discharge spectrometer (GDS) or energy disperse x-ray spectrometer (EDS) on a cross-section of the plated steel sheet. Generally, the composition of the Fe-Ni alloy layer may be formed such that the inner region close to the base steel sheet may have a high Fe content and the outer region close to the plating layer may have a high Ni content. In the present disclosure, the thickness of the alloy layer was defined as a length up to a point having 5% of Fe and a point having 5% of Ni by weight%. When each point is defined as a point at which the component is 0%, it may be difficult to determine the exact point, and measurement errors may occur.

When the thickness of the Fe-Ni alloy layer is less than 0.6 $\mu$m, bonding strength between the plating layer and the steel sheet may be weak, such that the plating layer may be detached during processing. According to the embodiment of the present disclosure, the thickness may be 0.8 $\mu$m or more. On the other hand, when the thickness exceeds 1.8 $\mu$m, the Fe component of the steel sheet may be exposed to the surface, which may cause rust. In order to suppress rust, the plating thickness of the Ni plating layer may be increased, but this may reduce economic efficiency, which may not be preferable. According to the embodiment of the present disclosure, the thickness may be 1.4 $\mu$m or less.

Ni plating layer

An Ni plating layer formed on the Fe-Ni alloy layer may be included.

The Ni plating layer according to the embodiment of the present disclosure may be a pure Ni plating layer, or a Ni-based plating layer including 50% or more of Ni and a balance of other elements.

Hereinafter, a method for manufacturing the plated steel sheet of the present disclosure may be described in detail.

A plated steel sheet according to the embodiment of the present disclosure may be manufactured by reheating, finishing-rolling, cooling, coiling, cold-rolling, recrystallization-annealing, Ni plating, and alloying-annealing a steel slab satisfying the alloy composition described above.

Reheating

The steel slab satisfying the alloy composition of the present disclosure may be reheated to a temperature range of 1180°C or higher.

The reheating process may be performed for re-solid-solution of various precipitates generated in the steel during slab manufacturing. For this effect, the temperature may be limited to 1180°C or higher. Meanwhile, considering the manufacturing facility aspect, an upper limit of the reheating temperature may be limited to 1280°C.

Finishing-rolling

The reheated steel slab may be finished-rolled in the temperature range of Ar3 or higher.

In finishing-rolling, in order to suppress a rolling shape defect caused by stress imbalance in each region in an austenite and ferrite dual phase region, the temperature may be limited to the Ar3 temperature or higher so as to perform rolling in the austenite single phase region. When the temperature is lower than Ar3, dual phase region rolling may be performed, rolling stability due to uneven material may be degraded.

Ar3 = 910 - 310[C] - 80[Mn] - 20[Cu] - 15[Cr] - 55[Ni] - 80[Mo] - 0.35(t - 8)          [Formula]

(In the formula, t is the thickness of the steel sheet (mm), and [C], [Mn], [Cu], [Cr], [Ni] and [Mo] may be the weight% of each element.)

Cooling and coiling

The finishing-rolled steel sheet may be cooled and coiled in the temperature range of 580-720°C.

A grain size of the steel sheet may be controlled by the coiling temperature, and the temperature may be limited to ensure an appropriate size of grain and precipitate so as to ensure strength and processability.

When the coiling temperature is lower than 580°C, the grain may be excessively refined, and when the temperature exceeds 720°C, the grain may be excessively coarsely formed.

In the present disclosure, the cooling conditions after finishing-rolling to the coiling temperature are not specifically limited, but air cooling may be performed.

Cold-rolling

The coiled steel sheet may be cold-rolled at a reduction ratio of 78.0-90.0%.

In the cold-rolling, the reduction ratio may be important in increasing strength at high temperature. As the reduction ratio increases, recrystallization nucleation may smoothly occur during annealing, such that the grain may be refined, and high-temperature strength may increase. In order to obtain a sufficient level of high-temperature strength, the reduction ratio may be limited to 78.0% or more. However, when the reduction ratio exceeds 90.0%, the deformation resistance due to rolling may increase excessively, such that it may be difficult to perform rolling and the shape after rolling may be defective. In the present disclosure, the reduction ratio may indicate the cumulative reduction ratio.

According to the embodiment of the present disclosure, by adding a pickling process before cold-rolling, the scale generated during hot-rolling may be reduced.

Recrystallization-annealing

The cold-rolled steel sheet may be recrystallized-annealed in a temperature range of 730-800°C.

The recrystallization-annealing may be performed to remove internal stress formed during cold-rolling and to ensure processability. To this end, an annealing process at a sufficiently high temperature may be required to completely cause recrystallization.

Also, as a subsequent process, during alloying-annealing, recrystallization and alloying may occur simultaneously, such that the diffusion rate at the interface between Fe and Ni may increase, and the thickness of the desired Fe-Ni alloy layer may be prevented from being excessively formed. The recrystallization-annealing process may be performed separately.

In the present disclosure, the temperature may be limited to 730°C or higher considering the increase in recrystallization temperature due to NbC. When annealing below 730°C, recrystallization may not be completely completed and some deformation grains may be present, such that cracks may be created during forming due to significant ductility reduction and strength increase in the steel sheet. However, when the temperature exceeds 800°C during recrystallization-annealing, it may be difficult to ensure strength at high temperature due to grain growth, and fracture or shape defects may occur due to strength reduction during annealing.

According to the embodiment of the present disclosure, in order to correct the shape of the steel sheet, additional rolling may be performed with a reduction ratio of 3.0% or less after the recrystallization-annealing.

Ni plating

The recrystallization-annealed steel sheet may be subjected to Ni-electroplating.

Ni plating may be performed to ensure corrosion resistance to electrolyte and atmosphere during product manufacturing.

In the case of hot-dip plating, it may be difficult to control the plating thickness below a specific level and the thickness deviation may be large, such that the plating may not be preferable for a cylindrical battery case material. Accordingly, in the present disclosure, Ni plating may be performed by electroplating. In the present disclosure, the electroplating conditions may not be particularly limited, and Ni plating may be performed under typical conditions applicable in the same technical field.

According to the embodiment of the present disclosure, when plating Ni, a pure Ni plating bath may be used, or a Ni-based plating bath including 50% or more of Ni and a balance of other elements may be used.

When plating Ni, the plating thickness may vary depending on the forming amount and the electrolyte type, and in the present disclosure, considering roughness, the plating thickness may be 0.6 $\mu$m or more. According to the embodiment of the present disclosure, an upper limit of the thickness may be 5.0 $\mu$m.

Alloying-annealing

The Ni-electroplated steel sheet may be alloyed and annealed in a temperature range of 650-750°C.

The Ni plating layer may not have excellent adhesion to the steel sheet immediately after electroplating, and may thus be easily removed during processing. To prevent this, annealing at a high temperature may be performed and an Fe-Ni alloy layer may be formed between the Ni plating layer and the base steel sheet by diffusion.

When the alloying-annealing temperature is less than 650°C, the thickness of the Fe-Ni alloy layer may be insufficient, such that it may be difficult to ensure adhesion. On the other hand, when the annealing temperature exceeds 750°C, the thickness of the Fe-Ni alloy layer may excessively increase, and the Fe component of the base steel sheet may be exposed to the surface of the Ni plating layer, such that corrosion resistance may be reduced.

According to the embodiment of the present disclosure, rolling may be additionally performed at a reduction ratio of 2.0% or less to correct the shape of the steel sheet after alloying-annealing.

The plated steel sheet of the present disclosure manufactured as above may have a room-temperature yield strength of 220-280 MPa and a yield strength of 100 MPa or more at 600°C after 30% deformation, such that strength and processability may be excellent.

The room-temperature yield strength was measured through a tensile test in which a typical JIS-5 standard plate sample at room temperature was pulled at 10 mm/min, and the high-temperature yield strength was measured through a tensile test at a rate of 0.04 mm/sdml after holding at 600°C for 10 minutes after 30% deformation. The 30% deformation may have been applied to the sample before the high-temperature tensile test, considering that drawing and ironing are performed during battery case molding to reduce the thickness by 30-50%. In order to ensure consistency of measurement, the present inventors applied deformation by rolling at a 30% reduction ratio instead of drawing and ironing. There may be a difference in the actual deformation depending on the size of the battery case, but to compare the superiority of materials under the same conditions, the present inventors devised a method of evaluating the high-temperature yield strength after deformation by unifying the deformation corresponding to a reduction ratio of approximately 30%.

Mode for Invention

Hereinafter, the present disclosure may be described more specifically through embodiments. However, it may be necessary to note that the embodiments below are merely intended to describe the present disclosure in greater detail by embodiments, and are not intended to limit the scope of rights of the present disclosure.

(Embodiment)

A plated steel sheet was manufactured using a steel slab having the composition in Table 1 below under the conditions in Table 2 below. The steel slab was reheated to 1220°C, hot-rolled at 900°C or higher, which is Ar3 or higher, to the same thickness of 4 mm, and coiled at 640°C. Here, the finishing-rolling temperature was all performed at the Ar3 temperature or higher. The coiled steel sheet was cold-rolled at the reduction ratio in Table 2, and annealed at the recrystallization-annealing temperature for 30 seconds. Thereafter, Ni-electroplating was performed to a thickness of 2.0 μm, and annealed at the alloying-annealing temperature in Table 2 for 20 seconds.

[Table 1]

| Samp le No. | Alloy composition(weight%) | | | | | | | | Relationa 1 expressio n 1 |
|---|---|---|---|---|---|---|---|---|---|
| | C | Si | Mn | Al | P | S | N | Nb | |
| 1 | 0.0018 | 0.014 | 0.30 | 0.032 | 0.008 | 0.006 | 0.0031 | 0.0160 | -22.4 |
| 2 | 0.0019 | 0.016 | 0.30 | 0.036 | 0.007 | 0.005 | 0.0029 | 0.0250 | -110.9 |
| 3 | 0.0030 | 0.016 | 0.31 | 0.038 | 0.006 | 0.006 | 0.0030 | 0.0250 | -19.3 |
| 4 | 0.0030 | 0.016 | 0.32 | 0.036 | 0.008 | 0.006 | 0.0031 | 0.0320 | -94.7 |
| 5 | 0.0046 | 0.014 | 0.29 | 0.034 | 0.007 | 0.007 | 0.0033 | 0.0390 | -36.8 |
| 6 | 0.0042 | 0.015 | 0.31 | 0.038 | 0.007 | 0.006 | 0.0032 | 0.0350 | -27.0 |
| 7 | 0.0030 | 0.014 | 0.18 | 0.034 | 0.007 | 0.005 | 0.0028 | 0.0252 | -21.5 |
| 8 | 0.0031 | 0.015 | 0.36 | 0.038 | 0.007 | 0.006 | 0.0030 | 0.0249 | -9.9 |
| 9 | 0.0030 | 0.014 | 0.51 | 0.036 | 0.007 | 0.006 | 0.0028 | 0.0242 | -10.7 |
| 10 | 0.0030 | 0.015 | 0.32 | 0.034 | 0.008 | 0.006 | 0.0032 | 0.0265 | -35.5 |
| 11 | 0.0030 | 0.014 | 0.29 | 0.035 | 0.007 | 0.006 | 0.0032 | 0.0260 | -30.1 |
| 12 | 0.0029 | 0.016 | 0.32 | 0.037 | 0.007 | 0.006 | 0.0030 | 0.0249 | -26.6 |
| 13 | 0.0031 | 0.014 | 0.28 | 0.038 | 0.007 | 0.006 | 0.0033 | 0.0252 | -13.4 |
| 14 | 0.0030 | 0.014 | 0.30 | 0.038 | 0.007 | 0.006 | 0.0031 | 0.0255 | -27.5 |
| 15 | 0.0030 | 0.014 | 0.29 | 0.035 | 0.007 | 0.006 | 0.0033 | 0.0245 | -11.4 |
| 16 | 0.0030 | 0.016 | 0.28 | 0.034 | 0.007 | 0.007 | 0.0031 | 0.0262 | -34.2 |
| 17 | 0.0029 | 0.014 | 0.28 | 0.033 | 0.007 | 0.006 | 0.0029 | 0.0242 | -18.9 |
| 18 | 0.0030 | 0.014 | 0.32 | 0.037 | 0.007 | 0.006 | 0.0027 | 0.0259 | -31.9 |
| 19 | 0.0005 | 0.016 | 0.33 | 0.033 | 0.007 | 0.006 | 0.0032 | 0.0245 | -222.1 |
| 20 | 0.0052 | 0.016 | 0.31 | 0.033 | 0.006 | 0.006 | 0.0031 | 0.0242 | 172.5 |
| 21 | 0.0056 | 0.014 | 0.30 | 0.032 | 0.007 | 0.006 | 0.0029 | 0.0390 | 46.5 |
| 22 | 0.0014 | 0.016 | 0.32 | 0.035 | 0.007 | 0.006 | 0.0032 | 0.0090 | 19.7 |
| 23 | 0.0048 | 0.016 | 0.31 | 0.037 | 0.007 | 0.006 | 0.0027 | 0.0450 | -84.7 |
| 24 | 0.0031 | 0.014 | 0.32 | 0.032 | 0.007 | 0.006 | 0.0029 | 0.0162 | 83.7 |
| 25 | 0.0048 | 0.014 | 0.31 | 0.032 | 0.007 | 0.006 | 0.0033 | 0.0255 | 125.2 |

(continued)

| Samp le No. | Alloy composition(weight%) | | | | | | | | Relationa 1 expressio n 1 |
|---|---|---|---|---|---|---|---|---|---|
| | C | Si | Mn | Al | P | S | N | Nb | |
| 26 | 0.0045 | 0.014 | 0.31 | 0.033 | 0.006 | 0.006 | 0.0030 | 0.0320 | 30.2 |
| 27 | 0.0029 | 0.015 | 0.06 | 0.037 | 0.008 | 0.006 | 0.0027 | 0.0239 | -12.9 |
| 28 | 0.0031 | 0.015 | 0.65 | 0.038 | 0.007 | 0.006 | 0.0028 | 0.0245 | -5.6 |
| 29 | 0.0030 | 0.014 | 0.76 | 0.035 | 0.007 | 0.006 | 0.0028 | 0.0238 | -5.9 |
| 30 | 0.0030 | 0.014 | 0.32 | 0.032 | 0.007 | 0.006 | 0.0028 | 0.0385 | -164.6 |
| 31 | 0.0031 | 0.015 | 0.31 | 0.036 | 0.006 | 0.006 | 0.0029 | 0.0245 | -4.4 |
| 32 | 0.0030 | 0.016 | 0.32 | 0.034 | 0.007 | 0.006 | 0.0029 | 0.0252 | -17.6 |
| 33 | 0.0030 | 0.016 | 0.32 | 0.034 | 0.007 | 0.006 | 0.0028 | 0.0246 | -17.0 |
| 34 | 0.0029 | 0.015 | 0.30 | 0.037 | 0.007 | 0.006 | 0.0030 | 0.0248 | -26.1 |
| 35 | 0.0030 | 0.014 | 0.28 | 0.034 | 0.008 | 0.006 | 0.0030 | 0.0242 | -7.0 |

[Relational expression 1]

$$R = ([C]/12.011 - [Nb]/92.906) \times 10^6$$

In the expression, [C] and [Nb] may be weight% of each element.

[Table 2]

| Sample No. | Cold-rolling | Recrystallization-annealing | Alloying-annealing |
|---|---|---|---|
| | Reduction ratio (3) | Temperature (°C) | Temperature (°C) |
| 1 | 84.0 | 761 | 700 |
| 2 | 84.0 | 767 | 694 |
| 3 | 84.0 | 763 | 707 |
| 4 | 84.0 | 767 | 697 |
| 5 | 84.0 | 759 | 701 |
| 6 | 84.0 | 757 | 701 |
| 7 | 84.0 | 765 | 701 |
| 8 | 84.0 | 754 | 695 |
| 9 | 84.0 | 762 | 700 |
| 10 | 80.0 | 758 | 695 |
| 11 | 84.0 | 762 | 701 |
| 12 | 88.0 | 755 | 693 |
| 13 | 84.0 | 735 | 694 |
| 14 | 84.0 | 766 | 701 |
| 15 | 84.0 | 795 | 707 |
| 16 | 84.0 | 758 | 655 |
| 17 | 84.0 | 765 | 703 |
| 18 | 84.0 | 758 | 741 |
| 19 | 84.0 | 764 | 700 |

(continued)

| Sample No. | Cold-rolling | Recrystallization-annealing | Alloying-annealing |
|---|---|---|---|
| | Reduction ratio (3) | Temperature (°C) | Temperature (°C) |
| 20 | 84.0 | 754 | 703 |
| 21 | 84.0 | 765 | 705 |
| 22 | 84.0 | 753 | 695 |
| 23 | - | - | - |
| 24 | 84.0 | 756 | 706 |
| 25 | 84.0 | 754 | 694 |
| 26 | 84.0 | 764 | 699 |
| 27 | - | - | - |
| 28 | 84.0 | 753 | 707 |
| 29 | 84.0 | 761 | 699 |
| 30 | 75.0 | 761 | 699 |
| 31 | 92.0 | 759 | 703 |
| 32 | 84.0 | 724 | 703 |
| 33 | 84.0 | 812 | 697 |
| 34 | 84.0 | 753 | 640 |
| 35 | 84.0 | 754 | 762 |

The ASTM grain size, the sum of solid-solution C and solid-solution N contents, and the Fe-Ni alloy layer thickness of the manufactured steel sheet were observed and listed in Table 3 below, and room-temperature yield strength and high-temperature yield strength were measured and listed. Also, formability, plating layer adhesion, shape freezing, corrosion resistance, and productivity for the steel sheet shape were evaluated and listed.

First, in the present disclosure, the solid-solution C and solid-solution N contents were measured through an internal friction test.

The ASTM grain size (ASTM grain size number) may be an index corelated with the grain size, and was measured by calculating from an image obtained through optical microstructure observation according to the ASTM E112 standard (standard test methods for determining average grain size). It may be indicated that, as the ASTM grain size increases, the average grain size may decrease.

The thickness of the Fe-Ni alloy layer may indicate the thickness of the component change layer in which Fe and Ni are present by diffusion between the base steel sheet and the Ni plating layer, and the cross-section of the plated steel sheet was measured by GDS (glow discharge spectrometer) or EDS (energy disperse X-ray spectrometer). The thickness of the Fe-Ni alloy layer was defined as the length up to the point having 5% of Fe and the point having 5% of Ni in weight%, and the thickness was measured and listed.

The room-temperature yield strength was measured through a tensile test in which a plate-shaped sample of the typical JIS-5 sample standard was pulled at room temperature at a rate of 10 mm/min, and the high-temperature yield strength was measured through a tensile test at a rate of 0.04 mm/s after rolling at a reduction ratio of 30% and holding at 600°C for 10 minutes.

Formability was determined by measuring the degree of mold wear during battery case molding. When the degree of mold wear increases by 20% or more compared to the material having a room-temperature yield strength of 230-270 MPa of the inventive example , the sample was determined to be defective. The degree of mold wear may be measured by dividing the wear thickness of the mold by the number of processing times. The wear area may be any area in which wear occurs by contact during molding, but the average value was calculated by performing more than 10,000 processing times to reduce measurement deviation.

Plating adhesion may indicate the degree of bonding between the plating layer and the steel sheet, and was evaluated by observing the surface through an optical microscope after molding the cylindrical battery case. When a crack of 10 μm or more is present in the surface portion after molding, it was determined that corrosion resistance of the plating layer was degraded, and plating adhesion was thus determined to be defective. The forming may be performed under the condition of drawing processing a material having a thickness of 0.3-0.8 mm to have a diameter of 20-50 mm and a height of 3.0-4.0 times the diameter, and the researchers processed to a diameter of 21 mm and a height of 70 mm and evaluated the plating adhesion.

The shape fixability may be an index of the degree to which the shape is held without changing after forming as a structure at room temperature, and it was evaluated by measuring the difference in shape immediately after forming a cylindrical battery case and after battery manufacturing and charging/discharging at least once. The charging/discharging may be performed 100 times by applying a Ni-containing NCM811 cathode material and manufacturing a battery having a diameter of 21 mm and a height of 70 mm and charging/discharging at 95% or more and discharging at 5% or less. In this case, when there was a shape difference of 0.3 mm or more immediately after forming and after manufacturing and charging/discharging, it was determined that the shape fixability was defective.

In the case of corrosion resistance, when spot rust was observed through the salt spray test (SST) in which a 5 wt% NaCl aqueous solution was sprayed at a temperature of 35°C and a relative humidity of 95% for 6 hours, it was determined to be below the criteria. Corrosion resistance may be related to the thickness of the alloy layer, and when the thickness of the Fe-Ni alloy layer is relatively great, Fe therein may be exposed to the surface, which may cause rust on the surface.

Also, in the case of hot rolled sheets for process step, when the difference between the highest and lowest points within 500 mm length perpendicular to the rolling direction was 1 mm or more, the shape was determined to be defective, and in the case of cold rolled sheets and annealed sheets, when the difference between the highest and lowest points within 500 mm length perpendicular to the rolling direction was 0.5 mm or more, the steel sheet shape was determined to be defective.

[Table 3]

| Sample No. | Microstructure | | Fe-Ni alloy layer | Properties | | | | | | | | Classification |
| | Grain size | soli d-solution C+N (ppm) | Thickness (μm) | Room-temperature yield strength (MPa) | High-temperature yield strength (MPa) | Formability | Plating adhesion | Shape freezing | Corrosion resistance | Steel sheet shape | |
|---|---|---|---|---|---|---|---|---|---|---|---|
| 1 | 11.1 | 2.6 | 1.2 | 256 | 119 | Good | Good | Good | Good | - | Inventive example 1 |
| 2 | 11.2 | 0.5 | 1.2 | 259 | 123 | Good | Good | Good | Good | - | Inventive example 2 |
| 3 | 11.3 | 2.3 | 1.1 | 266 | 126 | Good | Good | Good | Good | - | Inventive example 3 |
| 4 | 11.4 | 1.0 | 1.1 | 269 | 128 | Good | Good | Good | Good | - | Inventive example 4 |
| 5 | 11.6 | 2.8 | 1.2 | 270 | 130 | Good | Good | Good | Good | - | Inventive example 5 |
| 6 | 11.8 | 2.7 | 1.1 | 276 | 135 | Good | Good | Good | Good | - | Inventive example 6 |
| 7 | 11.2 | 3.1 | 1.2 | 235 | 110 | Good | Good | Good | Good | - | Inventive example 7 |
| 8 | 11.2 | 3.6 | 1.0 | 260 | 107 | Good | Good | Good | Good | - | Inventive example 8 |
| 9 | 11.1 | 2.9 | 1.0 | 270 | 110 | Good | Good | Good | Good | - | Inventive example 9 |
| 10 | 11.0 | 2.9 | 1.0 | 253 | 121 | Good | Good | Good | Good | - | Inventive example 10 |
| 11 | 11.4 | 2.5 | 1.2 | 265 | 126 | Good | Good | Good | Good | - | Inventive example 11 |
| 12 | 11.9 | 3.0 | 1.0 | 271 | 137 | Good | Good | Good | Good | - | Inventive example 12 |
| 13 | 11.4 | 2.8 | 1.0 | 254 | 121 | Good | Good | Good | Good | - | Inventive example 13 |

13

| Sample No. | Microstructure | | Fe-Ni alloy layer | Properties | | | | | | | Classification |
| | Grain size | solid-solution C+N (ppm) | Thickness (μm) | Room-temperature yield strength (MPa) | High-temperature yield strength (MPa) | Formability | Plating adhesion | Shape freezing | Corrosion resistance | Steel sheet shape | |
|---|---|---|---|---|---|---|---|---|---|---|---|
| 14 | 11.2 | 3.0 | 1.0 | 247 | 120 | Good | Good | Good | Good | - | Inventive example 14 |
| 15 | 11.1 | 2.8 | 1.2 | 245 | 112 | Good | Good | Good | Good | - | Inventive example 15 |
| 16 | 11.3 | 2.6 | 0.6 | 257 | 108 | Good | Good | Good | Good | - | Inventive example 16 |
| 17 | 11.1 | 2.9 | 1.1 | 247 | 109 | Good | Good | Good | Good | - | Inventive example 17 |
| 18 | 11.4 | 2.4 | 1.7 | 254 | 110 | Good | Good | Good | Good | - | Inventive example 18 |
| 19 | 10.2 | 0.2 | 2.1 | 186 | 72 | Good | Good | Defective | Defective | - | Comparative example 1 |
| 20 | 11.3 | 6.6 | 1.0 | 311 | 125 | Defective | Good | Good | Good | - | Comparative example 2 |
| 21 | 11.8 | 4.6 | 1.1 | 301 | 136 | Defective | Good | Good | Good | - | Comparative example 3 |
| 22 | 10.9 | 4.2 | 2.0 | 285 | 95 | Defective | Good | Good | Defective | - | Comparative example 4 |
| 23 | - | 1.8 | - | - | - | - | - | - | - | Hot rolled sheet Defective | Comparative example 5 |
| 24 | 11.1 | 5.4 | 1.1 | 299 | 115 | Defective | Good | Good | Good | - | Comparative example 6 |
| 25 | 11.4 | 5.6 | 1.2 | 305 | 125 | Defective | Good | Good | Good | - | Comparative example 7 |

EP 4 640 927 A1

(continued)

| Sample No. | Microstructure | | Fe-Ni alloy layer | Room-temperature yield strength (MPa) | High-temperature yield strength (MPa) | Properties | | | | | Classification |
|---|---|---|---|---|---|---|---|---|---|---|---|
| | Grain size | solid-solution C+N (ppm) | Thickness (μm) | | | Formability | Plating adhesion | Shape freezing | Corrosion resistance | Steel sheet shape | |
| 26 | 11.7 | 4.7 | 1.1 | 286 | 130 | Defective | Good | Good | Good | - | Comparative example 8 |
| 27 | - | 3.0 | - | - | - | - | - | - | - | Hot rolled sheet Defective | Comparative example 9 |
| 28 | 11.2 | 3.8 | 1.1 | 285 | 108 | Defective | Good | Good | Good | - | Comparative example 10 |
| 29 | 11.2 | 3.8 | 1.0 | 290 | 107 | Defective | Good | Good | Good | - | Comparative example 11 |
| 30 | 10.5 | 0.9 | 1.1 | 215 | 96 | Good | Good | Defective | Good | - | Comparative example 12 |
| 31 | 12.2 | 3.7 | 1.0 | 282 | 142 | Defective | Good | Good | Good | Cold rolled sheet Defective | Comparative example 13 |
| 32 | - | 3.2 | 1.1 | 422 | 155 | Defective | Good | Good | Good | - | Comparative example 14 |
| 33 | 10.9 | 3.2 | 1.0 | 215 | 105 | Good | Good | Defective | Good | Annealed sheet Defective | Comparative example 15 |
| 34 | 11.3 | 3.1 | 0.4 | 247 | 111 | Good | Defective | Good | Good | - | Comparative example 16 |
| 35 | 11.3 | 3.7 | 2.0 | 250 | 110 | Good | Defective | Good | Defective | - | Comparative example 17 |

As indicated in Table 3, in inventive example satisfying the alloy composition and manufacturing conditions of the present disclosure, the characteristics suggested in the present disclosure were satisfied, and the properties targeted in the present disclosure were also ensured.

In comparative example 1, the C content was low, less than 0.0010%, and thus, a sufficient amount of NbC was not formed. Accordingly, the grain was increased, less than 11.0, in terms of ASTM standard, and the room temperature and high temperature yield strengths were below the standards, such that the shape freezing was defective. Since the amount of NbC was small, the Ni diffusion rate was high during alloying-annealing, and the alloy layer thickness exceeded 1.8 $\mu$m, such that the plating adhesion was good, but the corrosion resistance was defective.

In comparative examples 2 and 3, the C content exceeded 0.0050%, which was excessive, and even when a large amount of Nb was added, the precipitation index exceeded 0. Accordingly, when alloying and annealing with solid-solution C, aging occurred, and the room-temperature yield strength exceeded 300 MPa, such that formability was defective.

In comparative example 4, the Nb content was less than 0.0100%, which was small, and even though the C content was as low as 0.0014%, the precipitation index exceeded 0. Accordingly, the room-temperature yield strength exceeded 280 MPa due to solid-solution C, and formability was defective. Also, due to the low NbC precipitation amount, the diffusion of Ni was too fast, and the thickness of the alloy layer exceeded 1.8 $\mu$m, such that corrosion resistance was defective.

In comparative example 5, the Nb content exceeded 0.0400%, which is excessive, and the hot-rolled sheet shape was defective, such that the subsequent process was not able to be performed. Nb may be an expensive element, and may also greatly increase the deformation resistance during hot-rolling, such that hot-rollability was reduced.

In comparative example s 6 to 8, the value of relational expression 1 exceeded 0, even though the entirety of components satisfied the suggested range. Accordingly, the sum of the solid-solution C or solid-solution N contents exceeded the range, such that high-temperature aging occurred during alloying-annealing, and yield strength significantly increased and exceeded 280 MPa, and accordingly, formability was defective.

In comparative example 9, the Mn content was less than 0.10%, the hot-rolled sheet shape was defective. Mn may combine with S at high temperature and may form MnS. When Mn was low, brittleness occurred during hot rolling due to the unprecipitated S, the hot rolled sheet shape was defective. Cold rolling was difficult for the hot rolled sheets having defective shapes, such that the subsequent process was not able to be performed.

In comparative example s 10 and 11, the Mn content exceeded 0.60%, and the strength at room temperature was excessively increased by solid-solution strengthening, such that formability was defective.

In comparative example 12, the primary reduction ratio was less than 78.0%, and the grain was formed significantly, and did not reach the room temperature and high-temperature strength criteria, and the shape freezing was defective. Since the reduction ratio was low, the grain nucleation was not active during recrystallization, such that the grain became coarsened after recrystallization was completed.

In comparative example 13, the primary reduction ratio exceeded 90.0%, which was excessively high, and the grain size was small, such that the room temperature strength exceeded 280 MPa, formability was defective. Also, due to the high cold reduction ratio, the cold rolled sheet shape was defective.

In comparative example 14, the recrystallization-annealing temperature was low, less than 730°C, and the room temperature yield strength exceeded the range suggested in the present disclosure, such that formability was greatly defective. Through structural observation of the manufactured steel sheet, it was confirmed that the rolling structure remained, and the grain size could not be measured due to the presence of the rolling structure. Through this, the annealing temperature was low for the steel of the present disclosure to recrystallize, such that recrystallization did not occur, and the rolled elongated grains had very low ductility, which may significantly hindered formability.

In comparative example 15, a recrystallization-annealing temperature exceeded 800°C, such that the grain was formed coarsely, room temperature strength was low and shape freezing was defective. Also, strength of the steel sheet was reduced during the high-temperature annealing process, and the shape of the annealed sheet was defective.

In comparative example 16, an alloying-annealing temperature was less than 650°C, which was low, such that the thickness of the alloy layer was less than 0.6 $\mu$m, which was small, and plating adhesion was defective.

In comparative example 17, an alloying-annealing temperature exceeded 750°C, which was high, such that the of the thickness alloy layer exceeded 1.8 $\mu$m, such that plating adhesion was good but corrosion resistance was defective.

Although the present disclosure has been described in detail through embodiments above, other forms of embodiments may also be possible. Therefore, the technical spirit and scope of the claims described below are not limited to the embodiments.

**Claims**

1. A plated steel sheet, comprising:

a base steel sheet including, by weight%, C: 0.0010-0.0050%, Si: 0.050% or less, Mn: 0.10-0.60%, Al: 0.010-0.060%, P: 0.015% or less, S: 0.015% or less, N: 0.0060% or less, Nb: 0.0100-0.0400%, and the balance of Fe and inevitable impurities;
a Fe-Ni alloy layer having a thickness of 0.6-1.8 $\mu$m, and formed on a base steel sheet; and
a Ni plating layer formed on the Fe-Ni alloy layer,
wherein an R value defined in relational expression 1 is 0 or less, and
wherein a room-temperature yield strength is 220-280 MPa:

$$[\text{Relational expression 1}]$$

$$R = ([C]/12.011 - [Nb]/92.906) \times 10^6$$

where [C] and [Nb] are weight% of each element.

2. The plated steel sheet of claim 1, wherein an R value defined in relational expression 1 is -120.0 or more.

3. The plated steel sheet of claim 1, wherein, in the base steel sheet, a sum of contents of solid-solution C and solid-solution N is 4.0 ppm or lower.

4. The plated steel sheet of claim 1, wherein a grain size of the base steel sheet is 11.0 or more in terms of ASTM standard.

5. The plated steel sheet of claim 1, wherein the plated steel sheet has a yield strength of 100 MPa or more at 600°C after rolling at a reduction ratio of 30%.

6. A method for manufacturing the plated steel sheet, the method comprising:

reheating a steel slab including, by weight%, C: 0.0010-0.0050%, Si: 0.050% or less, Mn: 0.10-0.60%, Al: 0.010-0.060%, P: 0.015% or less, S: 0.015% or less, N: 0.0060% or less, Nb: 0.0100-0.0400%, and a balance of Fe and inevitable impurities, and having an R value of 0 or less, the R value defined in relational expression 1;
finishing-rolling the reheated steel slab;
cooling and coiling the finishing-rolled steel sheet;
cold-rolling the coiled steel sheet at a reduction ratio of 78.0-90.0%;
recrystallization-annealing the cold-rolled steel sheet in a temperature range of 730-800°C;
Ni-electroplating the cold-rolled steel sheet; and
alloying-annealing the Ni-electroplated steel sheet in a temperature range of 650-750°C:

$$[\text{Relational expression 1}]$$

$$R = ([C]/12.011 - [Nb]/92.906) \times 10^6$$

where [C] and [Nb] are weight% of each element.

7. The method of claim 6,

wherein the reheating is performed in a temperature range of 1180°C or higher,
wherein the finishing-rolling is performed in a temperature range of Ar3 or higher, and
wherein the cooling and coiling is performed in a temperature range of 580-720°C.

8. The method of claim 6, wherein the method further includes pickling the coiled steel sheet before the cold-rolling.

9. The method of claim 6, wherein, in the Ni-electroplating, a plating thickness is 0.6 $\mu$m or more.

10. The method of claim 6, wherein the method further includes rolling at a pressure reduction of 3.0% or less after the recrystallization-annealing.

11. The method of claim 6, wherein the method further includes rolling at a pressure reduction of 2.0% or less after the

alloying-annealing.

## INTERNATIONAL SEARCH REPORT

| International application No. |
|---|
| **PCT/KR2023/016714** |

**A. CLASSIFICATION OF SUBJECT MATTER**

**C25D 7/06**(2006.01)i; **C25D 5/50**(2006.01)i; **C25D 5/36**(2006.01)i; **C22C 38/12**(2006.01)i; **C22C 38/04**(2006.01)i; **C22C 38/02**(2006.01)i; **C22C 38/00**(2006.01)i

According to International Patent Classification (IPC) or to both national classification and IPC

**B. FIELDS SEARCHED**

Minimum documentation searched (classification system followed by classification symbols)

C25D 7/06(2006.01); B21B 3/00(2006.01); C21D 8/02(2006.01); C22C 38/00(2006.01); C22C 38/12(2006.01); C22C 38/54(2006.01); H01M 4/66(2006.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 도금(plating), 니켈(nickel), 니오븀(niobium), 소둔(annealing), 압연(rolling), 열처리(heat treatment), 망간(manganese), 알루미늄(aluminum)

**C. DOCUMENTS CONSIDERED TO BE RELEVANT**

| Category* | Citation of document, with indication, where appropriate, of the relevant passages | Relevant to claim No. |
|---|---|---|
| X | KR 10-2022-0132580 A (NIPPON STEEL CHEMICAL & MATERIAL CO., LTD.) 30 September 2022 (2022-09-30)<br>See paragraphs [0061], [0068], [0071], [0077], [0079], [0116] and [0118], claim 1 and tables 1-2. | 1-11 |
| A | JP 05-287449 A (KAWASAKI STEEL CORP.) 02 November 1993 (1993-11-02)<br>See paragraphs [0032]-[0033] and [0066] and claim 1. | 1-11 |
| A | JP 2010-255021 A (JFE STEEL CORP.) 11 November 2010 (2010-11-11)<br>See paragraph [0044] and claims 1-4. | 1-11 |
| A | JP 2004-285419 A (NIPPON STEEL CORP.) 14 October 2004 (2004-10-14)<br>See paragraph [0025] and claims 1, 3, 6 and 8. | 1-11 |
| A | KR 10-2012-0134390 A (POSCO) 12 December 2012 (2012-12-12)<br>See claims 1-2 and 6. | 1-11 |

☐ Further documents are listed in the continuation of Box C.    ☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **30 January 2024** | **30 January 2024** |

| Name and mailing address of the ISA/KR | Authorized officer |
|---|---|
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
**Information on patent family members**

International application No.

**PCT/KR2023/016714**

| Patent document cited in search report | | | Publication date (day/month/year) | Patent family member(s) | | | Publication date (day/month/year) |
|---|---|---|---|---|---|---|---|
| KR | 10-2022-0132580 | A | 30 September 2022 | CN | 115362580 | A | 18 November 2022 |
| | | | | EP | 4131513 | A1 | 08 February 2023 |
| | | | | JP | 2021-163639 | A | 11 October 2021 |
| | | | | JP | 2021-163648 | A | 11 October 2021 |
| | | | | TW | 202145627 | A | 01 December 2021 |
| | | | | TW | I810538 | B | 01 August 2023 |
| | | | | US | 2023-0146305 | A1 | 11 May 2023 |
| | | | | WO | 2021-200506 | A1 | 07 October 2021 |
| JP | 05-287449 | A | 02 November 1993 | DE | 69311826 | T2 | 16 October 1997 |
| | | | | EP | 0565066 | A1 | 13 October 1993 |
| | | | | EP | 0565066 | B1 | 02 July 1997 |
| | | | | JP | 06-041683 | A | 15 February 1994 |
| | | | | JP | 3247139 | B2 | 15 January 2002 |
| | | | | JP | 3377825 | B2 | 17 February 2003 |
| | | | | KR | 10-1993-0021808 | A | 23 November 1993 |
| | | | | KR | 10-1996-0007431 | B1 | 31 May 1996 |
| | | | | US | 5360676 | A | 01 November 1994 |
| | | | | US | 5496420 | A | 05 March 1996 |
| JP | 2010-255021 | A | 11 November 2010 | JP | 5463720 | B2 | 09 April 2014 |
| JP | 2004-285419 | A | 14 October 2004 | None | | | |
| KR | 10-2012-0134390 | A | 12 December 2012 | None | | | |

Form PCT/ISA/210 (patent family annex) (July 2022)

**EP 4 640 927 A1**

**Patent documents cited in the description**

- KR 20190078406
- KR 19990053991
- KR 2003147499
- KR 20180109964